## Europäisches Patentamt

## European Patent Office

## Office européen des brevets

(19)

(11) Veröffentlichungsnummer: **0 072 983**

**A1**

(12) **EUROPÄISCHE PATENTANMELDUNG**

(21) Anmeldenummer: 82107346.7

(22) Anmeldetag: 13.08.82

(51) Int. Cl.³: **C 08 G 18/38**
C 08 G 18/80, C 09 D 3/72
H 01 B 3/30

(30) Priorität: 25.08.81 DE 3133571

(43) Veröffentlichungstag der Anmeldung:
02.03.83 Patentblatt 83/9

(84) Benannte Vertragsstaaten:
DE FR GB IT NL

(71) Anmelder: BAYER AG
Zentralbereich Patente, Marken und Lizenzen
D-5090 Leverkusen 1, Bayerwerk(DE)

(72) Erfinder: Dünwald, Willi, Dr.
Geschwister-Scholl-Strasse 16
D-5090 Leverkusen 1(DE)

(54) Verfahren zur Herstellung von Überzügen und die Verwendung von N,N',N"-Tris-(2-hydroxyethyl)-isocyanurat als Zusatzmittel für Drahtlacke auf Polyurethanbasis.

(57) Die Erfindung betrifft ein neues Verfahren zur Herstellung von Überzügen durch Beschichten hitzeresistenter Substrate mit einem Beschichtungsmittel, welches als Bindemittel ein Zweikomponenten-System bestehend aus Polyisocyanaten mit zumindest teilweise blockierten Isocyanatgruppen und Verbindungen mit gegenüber Isocyanatgruppen reaktionsfähigen Gruppen und gegebenenfalls weitere Hilfs- und Zusatzmitteln enthält, wobei man solche Zweikomponenten-Systeme verwendet, deren Komponente mit gegenüber Isocyanatgruppen reaktionsfähigen Gruppen zu 0,1 bis 60 Äquivalent-% aus N,N',N"-Tris-(2-hydroxyethyl)-isocyanurate besteht, sowie die Verwendung dieser letztgenannten Verbindung als die Verarbeitbarkeit verbesserndes Zusatzmittel für Drahtlacke, welche als Bindemittel Zweikomponenten-System der genannten Art aufweisen.

BAYER AKTIENGESELLSCHAFT        5090 Leverkusen, Bayerwerk
                                Wr/bc/c
Zentralbereich
Patente, Marken und Lizenzen


Verfahren zur Herstellung von Überzügen und die Verwendung von N,N',N"-Tris-(2-hydroxyethyl)-isocyanurat
als Zusatzmittel für Drahtlacke auf Polyurethanbasis

Die Erfindung betrifft ein verbessertes Verfahren zur
Herstellung von Überzügen auf hitzeresistenten Substraten, insbesondere Metalldrähten, unter Verwendung von
N,N',N"-Tris-(2-hydroxyethyl)-isocyanurat als Zusatzmittel enthaltenden Einbrennlacken auf Basis von Polyisocyanaten mit zumindest teilweise blockierten Isocyanatgruppen und Verbindungen mit gegenüber Isocyanatgruppen reaktionsfähigen Gruppen, sowie die Verwendung
der genannten Verbindung als Zusatzmittel in derartigen Lacken.

Es ist bereits bekannt, hitzeresistente Substrate unter Verwendung von Beschichtungsmitteln auf Basis
von Kombinationen aus organischen Polyisocyanaten
mit zumindest teilweise blockierten Isocyanatgruppen
und Verbindungen mit gegenüber Isocyanatgruppen reaktionsfähigen Gruppen mit einem Überzug zu versehen.

Le A 21 220

Diese bekannten Verfahren des Standes der Technik eignen sich insbesondere zur Drahtlackierung (vgl. z.B. DE-AS 1 644 794, DE-OS 2 404 739, DE-OS 2 404 740, DE-AS 2 626 175 oder DE-OS 2 840 352). Vorzugsweise werden bei diesen Verfahren des Standes der Technik solche Beschichtungsmittel verwendet, deren Polyisocyanatkomponente ausschließlich aus völlig blockierten Polyisocyanaten besteht. Die Beschichtungsmittel sind daher unterhalb 80°C lagerstabil und werden erst nach Beendigung des Beschichtungsvorgangs durch Erhitzen auf über 80°C liegende Temperaturen unter Abspaltung des Blockierungsmittels ausgehärtet.

Bei dieser Hitzevernetzung laufen mehrere Vorgänge ab: Das in den meisten Fällen vorliegende Lösungsmittel verdunstet, gleichzeitig tritt ein starker Viskositätsabfall der Bindemittelkomponenten als Folge des Temperaturanstiegs ein, bevor die Vernetzungsreaktion unter Abspalten und Verflüchtigung des Blockierungsmittels stattfindet.

Für die Oberflächenbeschaffenheit des entstehenden, ausgehärteten Films ist es nun von entscheidender Bedeutung, daß der geschilderte Geschehensablauf sich in optimaler Reihenfolge ereignet. So führt beispielsweise eine weitgehende Aushärtung vor Abdunsten des Lösungsmittels zur Ausbildung von Kratern. Eine zu spät erfolgende Vernetzung ist andererseits ebenfalls ungünstig, weil dann das bei der hohen Temperatur dünnflüssige Bindemittel beispielsweise unter dem Einfluß der Schwerkraft oder der

Le A 21 220

Oberflächenspannung seine Verteilung auf dem Substrat verändert, bevor es durch die einsetzende Aushärtung auf dem Substrat fixiert wird.

Bei der geschilderten Komplexität des Filmbildungsablaufes ist es demzufolge außerordentlich schwierig, Maßnahmen aufzufinden, die eine schnellere Verarbeitung ermöglichen.

Die Wahl niedrig siedender Lösemittel und damit ein schnellerer Durchgriff der Temperatursteigerung auf das Bindemittel führt meist zu Lackfilmen mit unzureichender Oberflächenbeschaffenheit. Ähnliches geschieht, wenn eine für die Urethanbildung spezifische Katalysierung zu vehement wirksam wird.

Überraschenderweise wurde nun gefunden, daß der Zusatz von N,N',N"-Tris-(2-hydroxyethyl)-isocyanurat (THEIC) zu den Beschichtungsmitteln, d.h. die Mitverwendung von THEIC als Bindemittelkomponente zu einer ganz wesentlichen Verbesserung der Verarbeitbarkeit der Beschichtungsmittel führt. Der Zusatz dieser Verbindung gestattet insbesondere eine wesentliche Erhöhung der Durchlaufgeschwindigkeit von Metalldrähten durch die üblicherweise bei der Drahtlackierung zur Anwendung gelangenden Drahtlackieranlagen, ohne negative Beeinträchtigung der Qualität der letztlich erhaltenen Lackierung.

Gegenstand der Erfindung ist somit ein Verfahren zur Herstellung von Überzügen durch Beschichten hitzeresistenter Substrate mit einem Beschichtungsmittel

Le A 21 220

welches als Bindemittel ein Zweikomponenten-System bestehend aus

i)    einer Polyisocyanatkomponente mit zumindest teilweise blockierten Isocyanatgruppen und

ii)   einer aus Verbindungen mit gegenüber Isocyanatgruppen reaktionsfähigen Gruppen bestehenden Komponente,

und gegebenenfalls weitere in der Lacktechnologie übliche Hilfs- und Zusatzmittel enthält, und Aushärtung der so erhaltenen Beschichtung bei erhöhten Temperaturen, dadurch gekennzeichnet, daß man solche Beschichtungsmittel verwendet, deren Bindemittelkomponente (ii) zu 0,1 bis 60 Äquivalentprozent, bezogen auf alle gegenüber Isocyanatgruppen im Sinne einer Additionsreaktion reaktionsfähige Gruppen, aus N,N',N"-Tris-(2-hydroxyethyl)-isocyanurat besteht.

Gegenstand der Erfindung ist auch die Verwendung von N,N',N"-Tris-(2-hydroxyethyl)-isocyanurat als die Verarbeitbarkeit verbesserndes Zusatzmittel für Drahtlacke, welche als Bindemittel Kombinationen von (i) zumindest teilweise blockierte Isocyanatgruppen aufweisenden Polyisocyanaten mit (ii) mindestens 2 gegenüber Isocyanatgruppen reaktionsfähige Gruppen aufweisenden Verbindungen enthalten.

Beim erfindungsgemäßen Verfahren bzw. bei der erfindungsgemäßen Verwendung werden Beschichtungsmittel verwendet, die neben den gegebenenfalls mitzuver-

Le A 21 220

wendenden Hilfs- und Zusatzmitteln als Bindemittel ein Zweikomponenten-System der genannten Art aufweisen.

Bei der Polyisocyanatkomponente (i) handelt es sich hierbei um beliebige, zumindest teilweise in blockierter Form vorliegende Polyisocyanate bzw. Polyisocyanatgemische der in der Polyurethanchemie an sich bekannten Art. Geeignete Polyisocyanate sind beispielsweise aliphatische, cycloaliphatische, araliphatische, aromatische und heterocyclische Polyisocyanate, wie beispielsweise Hexamethylendiisocyanat, Dodecamethylendiisocyanat, Cyclohexan-1,3- und -1,4-diisocyanat sowie beliebige Gemische dieser Isomeren, 1-Isocyanato-3,3,5-trimethyl-5-isocyanato-methyl-cyclohexan, 2,4- und 2,6-Hexahydrotoluylendiisocyanat sowie beliebige Gemische dieser Isomeren, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Polyphenylpolymethylenpolyisocyanate, wie sie durch Anilin-Formaldehyd-Kondensation und anschließende Phosgenierung erhalten und z.B. in den britischen Patentschriften 874 430 und 848 671 beschrieben werden, Allophanatgruppen aufweisende Polyisocyanate, wie sie z.B. in der britischen Patentschrift 994 890 beschrieben werden, Isocyanuratgruppen aufweisende Polyisocyanate, wie sie z.B. in den deutschen Patentschriften 1 022 789, 1 222 067 und 1 027 394 sowie in den deutschen Offenlegungsschriften

Le A 21 220

1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, Carbodiimidgruppen aufweisende Polyisocyanate wie sie z.B. in der deutschen Patentschrift 1 092 007 beschrieben werden oder Biuretgruppen aufweisende Polyisocyanate, wie sie z.B. in der deutschen Patentschrift 1 101 394, in der britischen Patentschrift 889 050 und in der französischen Patentschrift 7 017 514 beschrieben werden. Auch modifizierte Polyisocyanate der in DE-AS 1 266 427 beschriebenen Art können in ihrer zumindest teilweise blockierten Form erfindungsgemäß verwendet werden. Es ist auch möglich, beliebige Mischungen der vorgenannten Polyisocyanate zu verwenden.

Besonders bevorzugt werden zumindest teilweise blokkierte Polyisocyanate mit aromatisch gebundenen Isocyanatgruppen des Molekulargewichtsbereichs (ohne Einbeziehung des Gewichts des Blockierungsmittels) 174-1000 eingesetzt wie insbesondere 2,4-Diisocyanatotoluol, 2,6-Diisocyanatotoluol, die aus diesen Isomeren bestehenden technischen Gemische, 4,4'-Diisocyanato-diphenylmethan, 4,4'-Diisocyanato-diphenyldimethylmethan, 1,5-Diisocyanato-naphthalin, Homologen- bzw. Isomerengemische, wie sie in bekannter Weise durch Phosgenierung von Anilin/Formaldehyd-Kondensaten erhalten werden, Urethangruppen aufweisende Polyisocyanate, wie sie in an sich bekannter Weise durch Umsetzung überschüssiger Mengen einfacher Diisocyanate der zuletzt beispielhaft genannten Art, insbesondere von 2,4-Diisocyanatotoluol mit

Le A 21 220

aliphatischen, mehrwertigen Alkoholen des Molekulargewichtsbereichs 62-200, insbesondere Trimethylolpropan und anschließende destillative Entfernung des
nicht-umgesetzten Diisocyanat-Überschusses erhalten
werden, analog hergestellte, Urethangruppen aufweisende Polyisocyanate, die jedoch unter Verwendung
von THEIC als mehrwertiger Alkohol erhalten worden
sind, Isocyanuratgruppen aufweisende Polyisocyanate, wie sie durch Trimerisierung eines Teils
der Isocyanatgruppen der zuletzt beispielhaft genannten Diisocyanate, insbesondere von 2,4-Diisocyanatotoluol, zugänglich sind, sowie Isocyanatgruppen aufweisende Oligohydantoine wie sie beispielsweise gemäß GB-PS 1 195 938 zugänglich sind.

Die Isocyanatgruppen der erfindungsgemäß einzusetzenden Polyisocyanatkomponente (i) liegen in zumindest
teilweise blockierter Form vor. Dies bedeutet, daß
mindestens 50 %, vorzugsweise mindestens 80 % und
besonders bevorzugt 100 % der Isocyanatgruppen in
mit Blockierungsmitteln blockierter Form vorliegen.
Geeignete Blockierungsmittel sind die der an sich
bekannten Art wie z.B. Phenol, Kresol, $\epsilon$-Caprolac-
tam, Malonsäurediethylester, Acetessigsäureethylester, Cyclohexanonoxim, Methanol, m-Butanol oder
Cyclohexanol. Phenole, wie z.B. Phenol und die isomeren Kresole sind besonders bevorzugt. Geeignete
Blockierungsmittel sind beispielsweise in den oben
bei der Schilderung des Standes der Technik bereits
erwähnten Veröffentlichungen offenbart.

Die Bindemittelkomponente (ii) setzt sich aus THEIC
und mindestens einer weiteren Verbindung mit gegen-

Le A 21 220

über Isocyanatgruppen reaktionsfähigen Wasserstoffatomen zusammen. Derartige Verbindungen mit gegenüber Isocyanatgruppen reaktionsfähigen Wasserstoffatomen sind insbesondere höhermolekulare, d.h. ein Molekulargewicht von beispielsweise 200 bis 2000 aufweisende Polyhydroxylpolyester mit aliphatisch gebundenen Hydroxylgruppen der in der Polyurethanchemie bekannten Art, wie sie vorzugsweise aus Di-carbonsäuren wie Phthalsäure, Isophthalsäure, Terephthalsäure, deren Kernhydrierungsprodukten sowie Adipinsäure mit überschüssigen Mengen an Diolen zugänglich sind. Zwecks Erreichung eines gegebenenfalls erwünschten Verzweigungsgrades ist die Mitverwendung von tri- oder höherfunktionellen Alkoholen erforderlich. Zur Herstellung der Polyesterpolyole geeignete Diole bzw. tri- und höherfunktionelle Alkohole sind z.B. Ethylenglykol, 1,2-Propandiol, 1,3-Propandiol, 1,4-Butandiol, 1,2-Butandiol, 1,2-Pentandiol, 1,6-Hexandiol, Diethylenglykol, Triethylenglykol, Tetraethylenglykol, Polyethylenglykole, Dipropylenglykol, Tripropylenglykol, Tetrapropylenglykol, Glyzerin, Hexantriol, Trimethylolpropan, Trimethylolethan, Pentaerythrit, 4,4'-Bis-(2-hydroxy-ethyl)-diphenylpropan-2,2, Chinit, Maleinsäure-bis-ethylenglykolester, Adipinsäure-bis-ethylenglykolester, Benzoldicarbonsäure-bis-ethylenglykolester und THEIC.

Besonders gut als Komponente (ii) geeignet sind auch aliphatisch gebundene Hydroxylgruppen aufweisende Oligourethane des Molekulargewichtsbereichs 200-2000 der beispielsweise in DP-PS 1 644 794 oder GB-PS 1 195 886 beschriebenen Art. Diese Polyhydroxyoligourethane können auf einfache Weise durch Umsetzung der zu-

Le A 21 220

letzt genannten Diole und/oder Polyole mit unterschüssigen Mengen an Diisocyanaten der beispielhaft genannten Art erhalten werden.

Außer derartigen, Hydroxylgruppen aufweisenden Reaktionspartnern (ii) für die Polyisocyanatkomponente (i) sind erfindungsgemäß auch Hydroxylgruppen aufweisende Epoxide, Imidester, Imidesteramide, Hydantoine, Acrylate oder Polyvinylacetale geeignet.

Die erfindungsgemäße Komponente (ii) setzt sich zu 0,1 bis 60, vorzugsweise 2 bis 30 Äquivalentprozent aus freiem (d.h. nicht chemisch in anderen Ausgangsmaterialien gebundenem) THEIC und einem entsprechenden Anteil an mindestens einer der beispielhaft genannten Verbindungen mit gegenüber Isocyanatgruppen reaktionsfähigen Wasserstoffatomen zusammen.

Das Zweikomponenten-System, bestehend aus den Komponenten (i) und (ii) weist die beiden Komponenten in solchen Mengenverhältnissen auf, daß das Äquivalentverhältnis (zumindest teilweise blockierte Isocyanatgruppen): (gegenüber Isocyanatgruppen reaktionsfähige Gruppen) zwischen 0,1:1 und 2,8:1, vorzugsweise zwischen 0,5:1 und 1,9:1, insbesondere zwischen 0,8:1 und 1,6:1 liegt.

Bei Verwendung eines Überschusses an (zumindest teilweise blockierten) Isocyanatgruppen können diese beispielsweise mit den aktiven Wasserstoffatomen von Urethanbindungen unter Vernetzung des gebildeten Polyurethans abreagieren. Dies führt häufig zu einer gegebenenfalls erwünschten Erhöhung der Härte der beim

Le A 21 220

erfindungsgemäßen Verfahren erhaltenen Flächengebilde. Überschüssige Isocyanatgruppen können selbstverständlich auch mit sich selbst beispielsweise unter Isocyanuratbildung reagieren, auch derartige Reaktionen führen zu einer gegebenenfalls erwünschten Erhöhung der Härte der Flächengebilde. Die Verwendung von überschüssigen Mengen an Verbindungen mit gegenüber Isocyanatgruppen reaktionsfähigen Gruppen führt zu einer gegebenenfalls erwünschten Erhöhung der Flexibilität der beim erfindungsgemäßen Verfahren erhaltenen Flächengebilde. Bei Verwendung eines hohen Überschusses an Polyesterpolyolen innerhalb der obengenannten Bereiche empfiehlt es sich oft, einen Veresterungskatalysator wie beispielsweise Titantetrabutylat mitzuverwenden, um so eine zusätzliche Vernetzung des Bindemittels durch Umesterungsreaktionen zu bewirken. Die aus den Komponenten (i) und (ii) bestehenden Bindemittel enthalten, bezogen auf das Gewicht des Bindemittels im allgemeinen 1 bis 10, vorzugsweise 4 bis 10 Gew.-% freiem THEIC.

Außer dem Bindemittel, bestehend aus den Komponenten (i) und (ii) können die erfindungsgemäß einzusetzenden Beschichtungsmittel weitere in der Lacktechnologie an sich bekannte Hilfs- und Zusatzmittel enthalten.

Hierzu gehören beispielsweise, die Vernetzungsreaktion beschleunigende Katalysatoren, wie sie z.B. in DE-AS 2 626 175, Kolonne 7, Zeile 35-Kolonne 8, Zeile 27 beschrieben sind oder anderer basischer Verbindungen wie z.B. Aldimine auf Basis aliphatischer Aldehyde und aromatischer Amine. Diese Katalysatoren werden in der Regel in einer Menge zwischen 0,01 bis 5,0 Gew.-%, vorzugsweise 0,1 bis 1,0

Le A 21 220

Gew.-%, bezogen auf die Polyisocyanatkomponente, eingesetzt. Auch die in der Lacktechnik üblichen Zusatzstoffe wie z.B. Pigmente und Füllstoffe können mitverwendet werden.

Je nach Art der Bindemittelkomponenten (i) und (ii) ist eine Verarbeitung der Beschichtungsmittel aus der Schmelze oder aus Lösung angezeigt.

Als Lösungsmittel kommen sowohl solche in Betracht, wie sie üblicherweise zur Herstellung von Drahtlacken Verwendung finden, wie z.B. Phenol, Kresol und/oder Xylenol, als auch in üblichen Polyurethanlacken verwendete Lösungsmittel wie z.B. Methylethylketon, Methylisobutylketon, Butylacetat, als auch einwertige, gegebenenfalls Ethersauerstoffatome aufweisende Alkohole wie z.B. Cyclohexanol, Diethylenglykol-monomethylether oder Diethylenglykolmonoethylether oder beliebige Gemische derartiger Lösungsmittel. Selbstverständlich ist auch die Mitverwendung geeigneter Verschnittmittel wie z.B. von Toluol, Xylol oder höhersiedenden aromatischen Kohlenwasserstoffgemischen möglich. Falls die erfindungsgemäß zum Einsatz gelangenden Beschichtungsmittel in Form von Lösungen verwendet werden, handelt es sich im allgemeinen um Lösungen mit einem Feststoffgehalt von 15 bis 75 vorzugsweise 20 bis 55 Gew.-%.

Die beim erfindungsgemäßen Verfahren einzusetzenden Beschichtungsmittel können außerdem weitere Zusatzstoffe wie z.B. Pigmente und Füllstoffe enthalten.

Le A 21 220

Das erfindungsgemäße Verfahren erlaubt insbesondere die Herstellung von temperaturbeständigen Überzügen auf Metall, Keramik, Glasfasern oder -geweben. Die Applikation der erfindungsgemäß zu verwendenden Beschichtungsmittel kann nach allen Methoden der Lacktechnik wie z.B. Tauchen, Spritzen oder Streichen erfolgen. Nach erfolgter Applikation werden die beschichteten Substrate höheren Temperaturen, vorzugsweise in Einbrennöfen, ausgesetzt, um die Endvernetzung der Beschichtung durchzuführen. Diese Temperaturen liegen im allgemeinen über 80°C, vorzugsweise zwischen 180 und 700°C und besonders bevorzugt zwischen 250 und 500°C.

Besonders bevorzugtes Anwendungsgebiet für das erfindungsgemäße Verfahren ist die Herstellung von Drahtlackierungen nach dem an sich bekannten Tauch-, Rollenauftrags- oder Saugfilzverfahren mit nachgeschalteten Abstreiferdüsen oder -filzen.

In den nachfolgenden Beispielen beziehen sich alle Prozentangaben auf Gewichtsprozente.

Le A 21 220

Beispiel 1

100 Gew.-Teile eines Polyesters aus

1,6 Mol Terephthalsäuredimethylester
1,2 Mol Ethylenglykol und
0,8 Mol Glycerin mit einem OH-Gehalt von ca. 6 %

werden mit 200 Gew.-Teilen eines Adduktes aus

1 Mol Trimethylolpropan
3 Mol Toluylendiisocyanat und
3 Mol Phenol mit einem Gehalt an 13,4 % Phenol-blockierten
     NCO-Gruppen (MG = 42)

in einem Lösemittelgemisch aus gleichen Teilen Kresol
und Xylol zu einem Lack von 25 % Festgehalt gelöst.

Berechnet auf den Feststoffgehalt werden 1 % eines
Aldimins auf Basis von alkylsubstituiertem Acrolein
und Anilin als Beschleuniger zugesetzt.

Auf einer horizontalen Drahtlackieranlage mit katalytischer Verbrennung der Lösemittel von 2,40 m Länge
wird ein Cu-Draht von 0,1 mm Durchmesser lackiert.
Die Temperatureinstellung beträgt:

1) Schachthälfte: 450°C
2) Schachthälfte: 500°C

Die Durchlaufgeschwindigkeit des Drahtes kann bis
280 m/min gesteigert werden bei einwandfreier Be-

Le A 21 220

schaffenheit der Oberfläche des lackierten Drahtes.
Eine weitere Steigerung der Geschwindigkeit ist nicht
möglich. Es entsteht dann eine unbefriedigende Oberflächenbeschaffenheit.

Wird diesem Lack berechnet auf den Festgehalt 10 %
THEIC zugesetzt, kann jedoch die Abzugsgeschwindigkeit auf 380 m/min gesteigert werden.

Beispiel 2

200 Gew.-Teile eines Adduktes aus

1 Mol Trimethylolpropan
3 Mol Toluylendiisocyanat und
3 Mol Phenol entsprechend Beispiel 1

werden zusammen mit 100 Gew.-Teilen des Polyesters gemäß Beispiel 1 in einem Lösemittelgemisch aus gleichen
Anteilen Kresol und Xylol zu einem Lack von 40 % Festgehalt gelöst.

Mit diesem Lack wird auf einer vertikalen Drahtlackieranlage ein Cu-Draht von 0,7 mm Durchmesser lackiert.

Ofenlänge:              4 m
Schachttemperatur:      320°C
Düsenabstreifer:        6 Passagen

Bei einwandfreier Lackdrahtoberfläche wird in diesem
Falle die Erweichungstemperatur entsprechend DIN

Le A 21 220

46 453 10.2. als Kriterium für die jeweils erzielte Vernetzung herangezogen.

Die Erweichungstemperatur liegt bei den Lackiergeschwindigkeiten 7, 8, 9 und 10 m/min im Bereich von 240 bis 250°C und sinkt bei Abzugsgeschwindigkeiten $\geq$ 10 m/min auf 200°C und tiefer ab.

Wird dem Lack bezogen auf den Festgehalt 7,5 % THEIC zugesetzt, kann die Abzugsgeschwindigkeit des Cu-Drahtes auf 13 bis 14 m/min gesteigert werden. Das Absinken der Erweichungstemperatur setzt erst bei Geschwindigkeiten $\geq$ 14 m/min ein.

Beispiel 3

200 Gew.-Teile eines gemäß DE-AS 2 626 275 hergestellten Adduktes aus

825 g Benzylalkohol
600 g Trimethylolpropan
2625 g 4,4'-Diisocyanatodiphenylmethan mit einem Gehalt von 7,5 % an Benzylalkohol-blockierten NCO-Gruppen (MG = 42)

werden zusammen mit 100 Gew.-Teilen des Polyesters gemäß Beispiel 1 in einem Lösemittelgemisch aus gleichen Teilen Kresol und Xylol zu einem Lack mit 27 % Festgehalt gelöst.

Berechnet auf den Festgehalt werden 2 % Pb-octoat mit 24 % Pb und 1 % Zn-octoat mit 8 % Zn zugesetzt.

Le A 21 220

Bei dem im Beispiel 1 beschriebenen Lackierversuch gelingt es nur bei einer Geschwindigkeit von 250 m/min mit dieser Mischung Lackdrähte mit einwandfreier Beschaffenheit zu erhalten.

Nach Zusatz von 7 % THEIC erhöht sich die Geschwindigkeit auf 350 m/min.

<u>Beispiel 4</u>

230 Gew.-Teile des blockierten Polyisocyanates gemäß Beispiel 3 werden mit 100 Gew.-Teilen eines Hydroxyurethans aus

1    Mol Diethylenglykol
1    Mol Trimethylolpropan und
1,5 Mol 4,4-Diisocyanatodiphenylmethan mit einem OH-
        Gehalt von 5 %

in einem Lösemittelgemisch aus gleichen Teilen Diethylenglykol-monomethylether und Di-ethylenglykolmonoethylester zu einem Lack von 25 % Festgehalt gelöst.

Bezogen auf den Festgehalt werden 2 % Bleioctoat mit 25 % Blei und 1 % Zn-octoat mit 8 % Zink zugesetzt. Die beim Lackierversuch gemäß Beispiel 1 erzielbare Geschwindigkeit beträgt 240 m/min.

Nach Zugabe von 5 % THEIC (bezogen auf den Festgehalt) erhöht sich die Abzugsgeschwindigkeit auf 300 m/min.

<u>Le A 21 220</u>

Beispiel 5

220 Gew.-Teile des gemäß Beispiel 3 hergestellten blokkierten Polyisocyanats werden mit 100 Gew.-Teilen eines Polyesters aus

2   Mol Trimethylolpropan
1,5 Mol Ethylenglykol und
2   Mol Phthalsäureanhydrid mit einem Hydroxylgehalt
        von ca. 12 %

in einem Lösemittelgemisch entsprechend Beispiel 4 gelöst. Festgehalt 40 %. Bezogen auf den Festgehalt
werden 2 % Pb-octoat und 1 % Zn-octoat zugesetzt.

Die erzielbare Abzugsgeschwindigkeit beträgt 230 m/min.

Der Zusatz von 6 % THEIC, bezogen auf Feststoff, bringt
eine Steigerung der möglichen Abzugsgeschwindigkeit auf
290 bis 300 m/min.

Beispiel 6

100 Gew.-Teile des Polyesters gemäß Beispiel 1 werden
mit 50 Gew.-Teilen eines blockierten Isocyanatgruppen
aufweisenden Oligohydantoins mit einem Gehalt an Kresolblockierten NCO-Gruppen (MG = 42) von 1,7 %, hergestellt
gemäß GB-PS 1 195 938, aus

1   Mol N,N'-Bis(methoxycarbonyl-dimethyl-methyl)-4,4'-
        diaminodiphenylmethan und
1,3 Mol 4,4'-Diisocyanatodiphenylmethan

Le A 21 220

in einem Lösemittelgemisch aus gleichen Teilen Kresol
und Xylol zu einem Lack von 40 % Festgehalt gelöst.
Bezogen auf den Festgehalt werden 1,5 % polymeres
Butyltitanat zugesetzt.

Mit diesem Lack wird wie in Beispiel 2 beschrieben ein
Cu-Draht von 0,7 mm Durchmesser lackiert.

Bei einer Lackiergeschwindigkeit von mehr als 9 m/min
sinkt die Erweichungstemperatur auf Werte kleiner als
270°C ab.

Wird dem Lack zusätzlich noch 8 % THEIC, bezogen auf
den Festgehalt, zugesetzt, liegt die Erweichungstemperatur auch bei einer Lackiergeschwindigkeit von 13
m/min noch über 270°C.

Beispiel 7

100 Gew.-Teile eines Adduktes aus

1 Mol THEIC
3 Mol 4,4'-Diisocyanatodiphenylmethan und
3 Mol Phenol mit einem Gehalt an 9,7 % Phenol-blockierten
    NCO-Gruppen (MG = 42)

werden mit 100 Gew.-Teilen eines Hydroxyurethans aus

1    Mol Diethylenglykol
1    Mol THEIC und
1,5 Mol 4,4'-Diisocyanatodiphenylmethan mit einem OH-Ge-
    halt von 4,6 %

Le A 21 220

in einem Lösemittelgemisch aus gleichen Teilen Kresol und Solventnaphtha zu einem Lack mit 30 % Festgehalt gelöst. Bezogen auf den Festgehalt werden 2 % Bleioctoat zugesetzt.

Beim Lackierversuch gemäß Beispiel 1 erzielt man eine Lackiergeschwindigkeit von 280 m/min.

Der Zusatz von 4 %, bezogen auf Festgehalt, THEIC bringt eine Steigerung derselben auf 330 m/min.

Le A 21 220

Patentansprüche

1) Verfahren zur Herstellung von Überzügen durch Beschichten hitzeresistenter Substrate mit einem Beschichtungsmittel, welches als Bindemittel ein Zweikomponenten-System bestehend aus

    i)     einer Polyisocyanatkomponente mit zumindest teilweise blockierten Isocyanatgruppen und

    ii)     einer aus Verbindungen mit gegenüber Isocyanatgruppen reaktionsfähigen Gruppen bestehenden Komponente,

und gegebenenfalls weitere in der Lacktechnologie übliche Hilfs- und Zusatzmittel enthält, und Aushärtung der so erhaltenen Beschichtung bei erhöhten Temperaturen, dadurch gekennzeichnet, daß man solche Beschichtungsmittel verwendet, deren Bindemittelkomponente (ii) zu 0,1 bis 60 Äquivalentprozent, bezogen auf alle gegenüber Isocyanatgruppen im Sinne einer Additionsreaktion reaktionsfähige Gruppen, aus N,N',N"-Tris-(2-hydroxyethyl)-isocyanurat (THEIC) besteht.

2) Verfahren gemäß Anspruch 1, dadurch gekennzeichnet, daß man als Beschichtungsmittel ein solches verwendet, dessen Polyisocyanatkomponente (i) aus organischen Polyisocyanaten des Molekulargewichtsbereichs, ohne Einbeziehung des Molekulargewichts des Blockierungsmittels, 174-1000 mit ausschließlich aromatisch gebundenen Isocyanatgruppen besteht, wobei die Isocyanatgruppen im
mit Blockierungsmittel für Isocyanatgruppen blokkierter Form vorliegen.

3) Verfahren gemäß Ansprüchen 1 und 2, dadurch gekennzeichnet, daß man als Beschichtungsmittel solche verwendet, deren Bindemittelkomponente (ii)
im wesentlichen aus mindestens 2 aliphatisch gebundene Hydroxylgruppen aufweisenden Polyesterpolyolen des Molekulargewichtsbereichs 200-2000
und/oder aus mindestens 2 endständige, aliphatisch gebundene Hydroxylgruppen aufweisenden
Oligourethanen des Molekulargewichtsbereichs
200-2000 und THEIC besteht.

4) Verfahren gemäß Ansprüchen 1 bis 3, dadurch gekennzeichnet, daß man solche Beschichtungsmittel
verwendet, deren Bindemittelkomponenten (i) und
(ii) in einem solchen Mengenverhältnis vorliegen,
welches einem Äquivalentverhältnis (zumindest
teilweise blockierte Isocyanatgruppen) : (gegenüber Isocyanatgruppen reaktionsfähige Gruppen)
von 0,1:1 bis 2,8:1 entsprechen.

5) Verfahren gemäß Ansprüchen 1 bis 4, dadurch gekennzeichnet, daß das zu beschichtende Substrat
ein Metalldraht darstellt.

Le A 21 220

6) Verwendung von N,N',N"-Tris-(2-hydroxyethyl)-isocyanurat als die Verarbeitbarkeit verbesserndes Zusatzmittel für Drahtlacke, welche als Bindemittel Kombinationen von (i) zumindest teilweise blockierte Isocyanatgruppen aufweisenden Polyisocyanaten mit (ii) mindestens 2 gegenüber Isocyanatgruppen reaktionsfähige Gruppen aufweisenden Verbindungen enthalten.

Le A 21 220

| | Europäisches Patentamt | EUROPÄISCHER RECHERCHENBERICHT | **0072983** Nummer der Anmeldung |
|---|---|---|---|

EP 82 10 7346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 174 950 (D.E. CORDIER) * Spalten 8-10; Ansprüche 1-3,13,15,20,21; Spalte 1, Zeile 67 - Spalte 2, Zeile 53; Spalte 3, Zeilen 54-74 * | 1-6 | C 08 G 18/38 C 08 G 18/80 C 09 D 3/72 H 01 B 3/30 |
| Y | US-A-3 748 315 (G.S. WOOSTER et al.) * Spalte 6, Ansprüche 1-8; Spalte 2, Zeilen 13-63 * | 1,3-6 | |
| Y | FR-A-1 485 825 (I.C.I.) * Seiten 5,6; Zusammenfassung Punkte 1-1c; Seite 4, linke Spalte, Absatz 2 * | 1,5 | |

| RECHERCHIERTE SACHGEBIETE (Int. Cl. 3) |
|---|
| C 08 G H 01 B |

Der vorliegende Recherchenbericht wurde für alle Patentansprüche erstellt.

| Recherchenort DEN HAAG | Abschlußdatum der Recherche 08-12-1982 | Prüfer VAN PUYMBROECK M.A. |
|---|---|---|